# EUROPEAN PATENT APPLICATION

(11) **EP 3 159 684 A1**
(43) Date of publication of application: **26.04.2017**
(21) Application number: 15191265.6
(22) Date of filing: 23.10.2015
(51) Int. Cl.: G01N 27/12, H01L 21/02

(54) **METHOD FOR MANUFACTURING A GAS SENSOR**

(71) Applicant: Sensirion AG, 8712 Stäfa (CH)
(72) Inventor: RÜFFER, Daniel, 8712 Staefa (CH); EGLI, Daniel, 8712 Staefa (CH); HOEHNE, Felix, 8712 Staefa (CH); ANDERSSON, Pernilla, 8712 Staefa (CH); MÜCKE, Ulrich, 8712 Staefa (CH)

(57) **Abstract**

A method for manufacturing a gas sensor package comprises the steps of providing a semiconductor chip (1) and building a gas sensitive element (4) on a surface of the semiconductor chip (1) by contactless dispensing a first portion of a liquid (9) comprising sensitive material onto the surface of the semiconductor chip (1), and by annealing the dispensed first portion to generate a first layer (41) of sensitive material contributing to the gas sensitive element (4). For N times with N ≥ 1, another portion of a liquid (9) comprising the same sensitive material is contactless dispensed onto the previously generated layer (41) of sensitive material, and the other portion is annealed to generate another layer (42) of sensitive material contributing to the gas sensitive element (4).

## Description

### Field of the Invention

The present invention relates to a method for manufacturing a gas sensor, to a machine for manufacturing a gas sensor, and to a gas sensor.

### Technical Background

An increasing number of gas sensors tend to be integrated into semiconductor chips. It is desired to provide a method for manufacturing a gas sensor in which sensitive material is applied onto a surface of a semiconductor chip.

### Disclosure of the Invention

A method for manufacturing a gas sensor comprises the steps of providing a semiconductor chip and building a gas sensitive element on a surface of the semiconductor chip. The gas sensitive element is built by contactless dispensing a first portion of a liquid comprising sensitive material onto the surface of the semiconductor chip, and annealing the dispensed first portion to generate a first layer of sensitive material contributing to the gas sensitive element. For N times with N being an integer and N being equal to or exceeding one, another portion of a liquid comprising the same sensitive material is contactless dispensed onto the previously generated layer of sensitive material. The other dispensed portion of the liquid is annealed to generate another layer of sensitive material contributing to the gas sensitive element.

Hence, the present method suggests to build the gas sensitive element on the semiconductor chip by iterative applying a portion of the sensitive material, preferably contained in a liquid, and subsequently annealing the dispensed portion of the liquid to form a layer. By way of the iterative application a multilayer gas sensitive element is manufactured.

This sequence of manufacturing steps is preferred given that it was observed that when dispensing a bigger portion of the liquid onto the semiconductor chip in one go, especially a portion that is of sufficient volume to build the complete gas sensitive element from, the subsequent annealing may result in cracks in the gas sensitive element during its drying owed to its large height / thickness. Alternatively or in addition to the cracks, bubbles may become visible in the gas sensitive element during annealing because liquid remainders cannot escape properly owed to the large height / thickness of the gas sensitive element. In addition, applying a larger volume of the liquid to the semiconductor chip in one go may increase the area the liquid spreads into after dispensing, even if expansion inhibitors are applied. On the other hand, it was found that in many applications a certain minimum height is required for the gas sensitive element for enabling correct measurements. It was also observed that in the case of very thin gas sensitive elements - and in particular gas sensitive elements of a height sufficiently small not to have induced cracks after annealing - a resistance of the resulting gas sensitive element may be too high to be reliable be read.

E.g. in European Patent application EP 2 921 850 A1, a read-out circuit for a resistive integrated gas sensor is described. For designing such read-out circuits for integrated thin-film metal oxide gas sensors the low electrical conductivity of metal oxide materials may be a challenge. E.g. metal oxide material WO3 has an electrically conductivity of 10'000-1'000'000 Ω*m, depending on a doping of the WO3 and an exposure to gaseous analytes. In case a typical conductivity value r of 100'000 Ω*m is assumed, a sensor electrode distance 1 and width w of 5 µm each is assumed, and a thickness t of the gas sensitive element of 1 um is assumed, a resistance R = (r * 1) / (t * w) = 100 GΩ needs to be read by the associate read-out circuit which constitutes a challenge. In order to operate a read-out circuit in its best operation range, i.e. its linear range, it is therefore desired to reduce the resistances R to be measured. Known techniques to reduce a resistance R of a resistive element include a) reducing a distance d between the electrodes connecting to the sensitive element given that R ∼ (rho * d), or b) applying n finger electrodes thereby implementing a parallel circuit with 1/R = n/Rf. However, both techniques are of limited use: Technique a) is subject to processing restrictions and a too small electrode distance d increases the risk of having shorts. Technique b) requires extensive chip surface. This also results in an increased power consumption since the membrane on which the electrodes sit need to be increased.

While the thickness t of the gas sensitive element might be decreased as further alternative for reducing the resistance to be measured, such reduced thickness may lead to crack formation as mentioned above. Hence, it is desired to present a way of producing a thickness of the gas sensitive element sufficient to reduce its resistance. Such way preferably is desired to be compatible with thin film manufacturing by a micro-deposition technique.

In this context, the present method allows building a gas sensitive element on a semiconductor chip where the element only claims a very small footprint / area on the surface since only small portions of the liquid are dispensed per time such that an uncontrolled expansion of the liquid on the surface of the semiconductor chip owed to the pure volume of the dispensed portion is prevented. At the same time a gas sensitive element of sufficient height is built and hence ensures a sufficient gas compound sensitivity. And the gas sensitive element is not prone to cracks given that its manufacturing process is designed not to anneal a large liquid volume but multiple small volume portions of the liquid in a sequence.

Preferably, the means for annealing the subject portions of liquid dispensed on the semiconductor chip comprises a heater arranged in the semiconductor chip itself - also referred to as chip in the following. Such heater preferably is thermally coupled with an area of the surface of the semiconductor chip to build the gas sensitive element on. Specifically, in case the sensitive material contains metal oxide, such heater preferably is provided anyway in the chip for operating the gas sensor since the metal oxide material becomes sensitive to respective gas compounds at elevated temperatures. This very heater can be used for annealing the newly dispensed portion/s of the liquid. In particular this embodiment allows not to transfer the semiconductor chip between a dispensing station and an annealing station in a manufacturing site which would otherwise challenge a precise aligning of the chip prior to dispensing, for example. Instead, the semiconductor chip can remain in a stationary position during and between all steps of repeated dispensing and annealing. However, in a different embodiment, and not limited to the heater being used as annealing means, the semiconductor chip may be transferred between separate dispensing and annealing stations.

The annealing may in a different embodiment be performed by exposing the dispensed portion to a heat source external to the semiconductor chip. Such heat source may contain one or more of an infrared or visible light source for heating the subject portion. The light source may be operated in a flash mode, for example.

In terms of annealing the dispensed portion, it is understood that the dispensed portion shall include the dispensed portion at the time of dispensing, or the dispensed portion left at the time of annealing or starting the annealing. In the first variant, a volume of the portion that is dispensed may be identical to the portion that is annealed in case the annealing is executed immediately or soon after the dispensing. In the second variant, the volume of the portion dispensed may be more than the volume annealed in case an interval between dispensing and annealing allows the subject portion to dry to some extent. Such drying step may be applied on purpose in between the dispensing step and the annealing step, or may be a side-effect owed e.g. to the time it takes for transferring the gas sensor between a dispensing and an annealing station. In any case, annealing the dispensed portion shall also include annealing the portion of liquid left at the beginning of the annealing step which annealing step may be initiated at some time after dispensing. In another variant, other processing steps may be executed between a dispensing and the corresponding annealing step, be it a drying step at room temperature without generating additional heat prior to the annealing step, or a further dispensing and drying step following a first drying step, in particular in case the portions dispensed by the dispenser have a volume too small to build the envisaged thin layer from in one go, etc. In a further embodiment, after the dispensing and annealing of the final layer on the stack, a further annealing step may be implemented which may be different in length and / or temperature from the previous annealing steps associate with the building of the individual layers, which further annealing step in one embodiment may also replace the individual annealing step for the final layer of the stack. It is further understood, that by annealing any dispensed portion the yet existing and individually annealed layers may also be heated in each subsequent annealing step. Hence, annealing a dispensed portion of the liquid is not to be understood to solely anneal this portion at a time, but may also have an annealing effect on the other layers built from previously dispensed portions of the liquid and annealed in individual assigned annealing steps.

The semiconductor chip preferably comprises a bulk substrate of semiconducting material such as silicon. Preferably, the semiconductor chip comprises a recess in the bulk substrate such that a remainder of the bulk substrate and / or a layer stack applied to the bulk substrate contributes to a membrane spanning the recess. The layer stack may contain insulating and metal layers such as used in CMOS processing. Preferably, the heater of the semiconductor chip is arranged in or on the membrane, and the area to build the gas sensitive element on is on the membrane as well. By such means, the heater on the one hand is thermally coupled to the sensitive element to be built and high temperatures can be achieved in the membrane by low power owed to the small dimension of the membrane. At the same time, a thermal conduction along the thin membrane is sufficiently small not to induce high temperatures in the rest of the semiconductor chip, and, for example impact the electronic circuitry which in one embodiment may be integrated in the semiconductor chip, e.g. by CMOS processing.

These advantages do not only apply during operating the gas sensor but also during manufacturing the gas sensitive element. The annealing executed by the heater integrated into the chip allows very short heating cycles. For example, the first and any other dispensed portion of the liquid is annealed by activating the heater for a time in a millisecond range or in a second range, e.g. between 5 ms and 200 ms, or between 200 ms and 50 s, or in a range between 50 s and 500 s. This allows a speedy iteration of dispensing and annealing steps, which results in a short manufacturing time. Still, the dispensed liquid can be heated during this time to e.g. a maximum temperature of more than 300° Celsius, and preferably more than 400° Celsius, such as 450° Celsius. A temperature drop subsequent to a deactivation of the heater e.g. down to room temperature may in one embodiment be a condition that triggers the next portion of the liquid to be contactless dispensed. In one embodiment, the temperature of the gas sensitive element has to reach a defined temperature value in the range of 100° Celsius and less, or preferably of 50° Celsius and less for initiating a new dispensing action.

The volume of each portion of the liquid to be dispensed at a time is preferably determined upfront for generating a gas sensitive element of a certain height, e.g. of > 2000 nm. A sample volume of the liquid portion applied in one go may be in the range between 1 pL and 1000 pL, preferably between 50 pL and 200 pL. The height of each individual layer preferably is in the range of 10 nm - 2000 nm, preferably 1000 nm - 2000 nm. The volume of each portion to be dispensed in one go hence depends on an area the gas sensitive element is expected to cover and on the height of the layer to be achieved by one dispensing shot. In case the gas sensitive element has a target height and a number of cycles is desired not to be exceeded, the volume of the portion may depend on this number, too. The resulting gas sensitive element may in one embodiment have a lateral or longitudinal extension of less than 100 µm. Electrodes may be provided in the semiconductor chip for contacting the resulting gas sensitive element which electrodes are preferably spaced apart from each other by less than 100 µm.

Preferably, each portion of the liquid has the same volume. This results in building the gas sensitive element from a number of layers of essentially the same height.

Given that it is desired to build a uniform gas sensitive element from multiple layers, at least the sensitive material applied in each portion of the liquid is preferably the same, even if the liquid the portions are taken from is not the same but e.g. stem from different containers. In case the sensitive material is a metal oxide, this metal oxide is contained in each portion of liquid to be dispensed for building the gas sensitive element. However, it is even more preferred that a common liquid serves for taking the individual portions from. For example, in case the dispensing process is an ink jet printing process - as it is in a preferred embodiment -, then the ink representing the liquid preferably is provided in a reservoir of a printing head, or more general of a dispenser, such that each portion to be dispensed is taken from the very same liquid out of the common reservoir. By doing so, it may be best guaranteed that the gas sensitive element made from the multiple individual layers is homogeneous at a maximum, and therefore provides excellent sensing conditions.

The liquid may be one of a solution, a suspension or a colloid suspension, subject to the sensitive material used.

The number N of dispensing and annealing cycles may depend from the desired height of the gas sensing element and the volume of the individual portions dispensed. Preferably, the number N is a predefined number, e.g. between two and five, such that the initial dispensing and annealing on the surface of the semiconductor chip is followed by a number between one and four additional dispensing and annealing cycles each adding another layer on top of the topmost already existing layer. In a different embodiment, however, the number of cycles may not be defined upfront, but may be determined subject to a target height of the gas sensitive element and subject to a height of the stack of layers already deposited. Hence, during manufacturing, and preferably after each annealing step, a cumulative height of the layers generated so far is measured, and is compared to a target height. It is continued with dispensing and annealing until the target height is reached or exceeded by of the cumulative layers.

There are multiple options when to execute the dispensing and annealing cycles within the overall manufacturing process of the gas sensor. It may be preferred to have the semiconductor chip prepared prior to building the gas sensitive layer thereon. Such preparation may include one or more of:
- Integrating circuitry into the substrate, e.g. circuitry for (pre-)processing signals expected from the gas sensitive layer to be build;
- Integrating the heater in the semiconductor chip, e.g. in a metal layer of the layer stack deposited on the bulk substrate; This manufacturing step is executed prior to start building the gas sensitive layer in case the heater is used for annealing;
- Etching a recess in the substrate underneath a designated area for the gas sensitive element, and underneath an area the heater is arranged if any.

In a preferred embodiment, in addition to the above preparatory steps, or alternatively, the semiconductor chip is already mounted on a carrier and / or is partially encapsulated including an opening in the encapsulation prior to building the gas sensitive element. In the latter case, the respective portions of the liquid are applied through the opening in the encapsulation onto the uncovered portion of the surface of the semiconductor chip.

Preferably, multiple gas sensors are manufactured in the same processing steps thereby making use of a common carrier supporting multiple semiconductor chips. After the semiconductor chips being mounted to the common carrier, e.g. to a leadframe, and either after or prior to encapsulating the chips if done so, the liquid including the sensitive material preferably is applied in multiple portions onto the (uncovered) surface of the respective semiconductor chip. Hence, the dispensing and annealing steps are performed for multiple semiconductor chips while these chips continue to be mounted to the common carrier. In a first variant for processing on the common carrier, a single gas sensitive element is built from the beginning to its end without a gas sensitive element being built or partly built on a different semiconductor chip in the meantime. For example, in case the dispensing is performed by a print head, the print head remains stationary it its position during building the entire gas sensitive layer. In between two printing intervals, the heater of the subject semiconductor chip preferably is controlled to heat and thereby anneal the previously dispensed portion of the liquid resulting in a layer of sensitive material. Only if the building of the present gas sensitive element is completed, the print head may move on to a different semiconductor chip for building the corresponding gas sensitive layer on. Hence this first variant suggests a fully sequential building of gas sensitive elements per semiconductor chip which has the advantage of preventing any re-alignment steps between the print head and the semiconductor chip.

In a second variant, multiple print heads or multiple individual nozzles in a print head are provided, each for dispensing sensitive material on an assigned semiconductor chip. In this full parallel variant, multiple gas sensitive elements can be manufactured in parallel, again without requiring a relative movement between the chips and the assigned print heads or nozzles during the entire manufacturing.

In a third variant, a print head and/or an individual nozzle of a print head may switch between different semiconductor chips while manufacturing the corresponding gas sensitive layers. For example, the print head may print a first portion of the liquid onto a first chip. Subsequently, the print head may move to a second chip and print a first portion of the liquid on the second chip. During this period in time, the first portion on the first chip may be annealed into a first layer of sensitive material by activating the corresponding heater. Once, the annealing at the first chip is finalized, the print head may return from the second chip and print a second portion of the liquid on top of the first layer on the first chip while the second chip is annealed during this time. Instead of returning to the first chip, the print head may move on to a third chip while the second chip is annealed.

In case a semiconductor chip shall be built containing multiple cells, i.e. multiple gas sensitive elements each of which can separately be read, it is preferred that a print head comprises multiple nozzles wherein each nozzle may print one of the cells. Preferably, the print head may contain a multitude of nozzles, e.g. more than a hundred nozzles and preferably 500 nozzles, by which print head the cells of multiple semiconductor chips arranged on the common carrier are printed. For example, in case a semiconductor chip shall support n cells, n nozzles of the print head are reserved for printing the n cells, while n other nozzles of the print head are reserved for printing the cells of another semiconductor chip on the common carrier.

In a preferred embodiment, a print head comprises a dedicated sensitive material to print, such that when a different sensitive material shall be printed on the or a different semiconductor chip on the common carrier, a different print head containing the different sensitive material is used for doing so.

Finally, the common carrier may be diced for separating the resulting gas sensors. In different embodiments, the common carrier is diced before the printing process, or during the printing process between one of the steps thereof.

According to another aspect of the present invention, a machine is provided for manufacturing a gas sensor, the machine comprising a support for supporting a semiconductor chip, a dispenser containing a reservoir for a liquid comprising a sensitive material to be dispensed onto a semiconductor chip to be arranged on the support, for building a gas sensitive element on a surface of the semiconductor chip and electrical contacts for connecting to a heater for annealing the liquid dispensed onto the semiconductor chip. The heater may be a heater internal to the chip or external. In addition, a control unit is provided which is configured to control the dispenser and to supply a control signal to the electrical contacts that invokes dispensing and annealing cycles applied to the chip according to embodiments of the method as presented above.

In a further aspect of the present invention, a gas sensor is provided comprising a semiconductor chip, and a gas sensitive element arranged on a surface of the semiconductor chip. The gas sensitive element comprises multiple layers of the same gas sensitive material.

Other advantageous embodiments of the gas sensor package are listed in the dependent claims as well as in the description below.

### Brief Description of the Drawings

Embodiments of the present invention, aspects and advantages will become apparent from the following detailed description thereof. Such description makes reference to the annexed drawings, wherein the figures show:

Fig. 1 in diagrams a) to d) manufacturing steps as applied in an embodiment of a method according to the present invention; and

Fig. 2 a gas sensor package in a cut view according to an embodiment of the present invention.

### Detailed Description of the Drawings

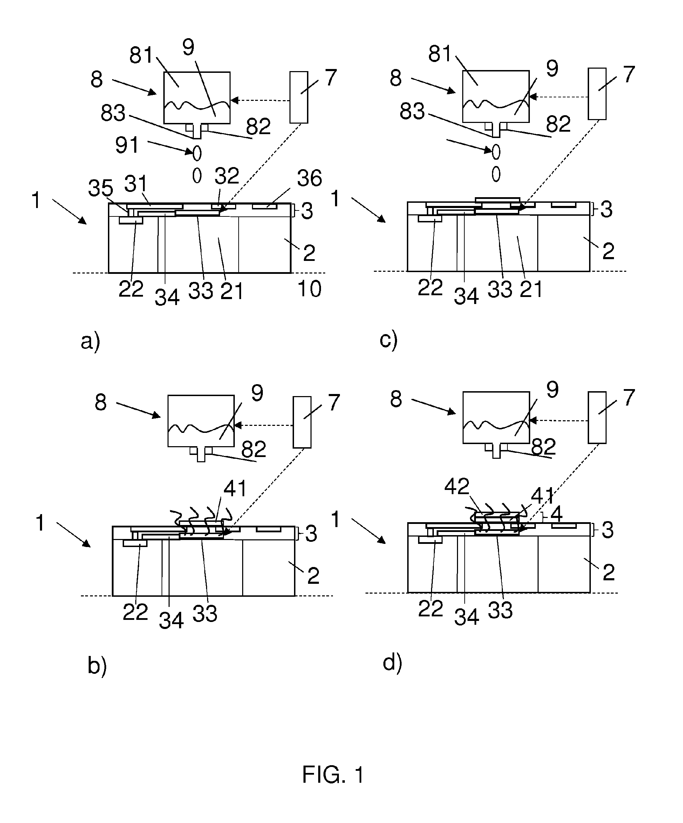

Figure 1 illustrates a method for manufacturing a gas sensor according to an embodiment of the present invention. A semiconductor chip 1 is provided comprising a semiconductor substrate 2, such as silicon bulk material which is covered at its front side by a layer stack 3 which include insulating and metal layers, e.g. being a CMOS stack as defined in CMOS processing. The layer stack 3 preferably is structured such that e.g. electrodes 31 and 32 are formed in a top metal layer for contacting a gas sensitive element to be built on the semiconductor chip. Contact pads 36 may be provided subject to the concept of contacting the gas sensor from the outside. Preferably, electronic circuitry 22 is integrated into the semiconductor chip 1 which circuitry 22 may be connected to the electrode 31 by a via 35 in the layer stack 3, and to the other electrode 32 (not shown). A heater 33 is embodied in the layer stack 3, e.g. by having structured a lower metal layer. The heater 33 preferably is connected to the circuitry 22, e.g. by a connector 34 made from the same lower metal layer.

The circuitry 22 may be configured to receive signals from the gas sensitive element yet to be built via the electrodes 31 and 32, and to control the heater 33 by applying current to the heater 33 via the connectors 34, e.g. by controlling a power switch embodied in the circuitry 22.

The substrate 2 is preferably etched or otherwise partially removed from its backside such that the semiconductor chip 1 has a recess 21. As a result of building the recess 21 in the semiconductor chip 1, a thinned structure is generated referred to as membrane in the following which spans the recess completely or partially. Both, the gas sensitive layer yet to be built and the heater 33 are arranged on or in the membrane above the recess 21. This arrangement is owed to reducing a heat transfer from the membrane to the rest of the semiconductor chip 1.

A schematic print head 8 is provided for ink jet printing a gas sensitive element onto the surface of the semiconductor chip 1, which currently sits on a support 10 of a machine for manufacturing gas sensors, the print head 8 is also part of. The print head 8 comprises a reservoir 81 partly filled by a liquid 9. The sensitive material to build the gas sensitive element from is contained in the liquid 9. In the present example, the print head 8 comprises a piezo actuator 82 arranged at a nozzle 83 of the print head 8 for forming and ejecting droplets 91 of the liquid 9 towards the semiconductor chip 1. One or more droplets 91 may contribute to the portion of liquid that is dispensed to the semiconductor chip prior to annealing the dispensed portion.
In this embodiment, however, applicable to any of the other embodiments, too, the sensitive material comprises a metal oxide material. The resulting gas sensitive element hence is made from metal oxide. Specifically, the sensitive material may contain a semiconducting metal oxide material. A metal oxide material may generally include one or more of tin oxide, zinc oxide, titanium oxide, tungsten oxide, indium oxide and gallium oxide. The metal oxide may additionally be doped with a noble metal such as Au, Pt, Pd, Ru, Rh, Re, Ir. Such metal oxides may be used for the detection of analytes such as VOCs, nitrogen dioxide, methane, ammonia or hydrogen sulphide, H2O, CO2, NOX, ethanol, CO, ozone, formaldehyde, or xylene without limitation. Metal oxide sensors are based on the concept that gaseous analytes - also referred to as compounds - interact with the metal oxide element at elevated temperatures of the gas sensitive element in the range of more than 100° Celsius, and specifically between 250° Celsius and 500° Celsius. As a result of the catalytic reaction, the conductivity of the gas sensitive element may change which change can be measured. Hence, such gas sensors are also denoted as high temperature chemore-sistors for the reason that a chemical property of the analyte is converted into an electrical resistance at high temperatures of the sensitive element. Preferably, by means of such a gas sensor a gas may be investigated at least as to the absence or presence of the subject analyte/s the gas sensor is sensitive to. Hence, the gas supplied to the gas sensor may be analyzed by means of the sensitive layer as to if and which of the chemical substances or compounds the sensitive layer is sensitive to are present in the gas supplied.

The semiconductor chip - without being limited to the present embodiment - may comprise multiple gas sensitive elements arranged on the same or on different membranes for building a gas sensor with an array of gas sensing cells. Preferably, each or at least some of the gas sensing elements are made from different materials such that the gas sensor is designed for sensing different analytes. Each gas sensing cell preferably may be read individually. A combination of analytes detected in a gas supplied may suggest for a certain odour or for a certain gas. It is always subject to a design of the gas sensor as to how many different analytes and/or how many different properties of an analyte the gas sensor is sensitive to.

In another embodiment, the sensitive material may comprise a polymer that in one embodiment may be sensitive to H₂O such that the sensor may be a humidity sensor. A capacity or a resistance of such polymer layer may be measured for deriving information as to the gas that may interact with the sensitive layer.

Returning to the embodiment of Figure 1, the print head 8 is controlled by a control unit schematically illustrated by reference 7 such that only a defined portion of the liquid 9 is dispensed to the semiconductor chip 1 in diagram 1a), see dashed line. Such dispensing may form a dot of the liquid on the surface of the semiconductor chip 1, and specifically on the topmost layer of the layer stack 3 which dot in a next step is heated for removing liquid remainders. At the end of such process also referred to as annealing, the sensitive material present in the liquid remains in form of a layer 41 as is shown in diagram 1b). As is indicated in diagram 1b) the annealing is performed by the heater 33 of the semiconductor chip 1, which heating schematically is indicated by lines representing heat.

For doing so, after having stopped the dispensing of the liquid from the print head 8, the control unit 7 starts the annealing process by providing a corresponding control signal to an electrical contact e.g. at the support 10, or of a probe, or of a different means for contacting the semiconductor chip 1, and thereby triggers a heating by the heater 33. Preferably, the heating process is controlled by the circuitry 22 of the semiconductor chip 1 such that in this embodiment the control unit 7 may not only supply a heating current but also a supply current for operating the circuitry 22. In such embodiment, the supply current to the circuitry 22 may automatically trigger a heating routing running while e.g. the heating current may separately be supplied to the semiconductor chip 1.

After having annealed the first layer 41 according to diagram 1b), another layer 42 may be built on top of the first layer 41. For this purpose, the print head 8 - again controlled by the control unit 7 - dispenses another defined portion of the liquid 9 onto the first layer 41 such as is indicated in diagram 1c). In a subsequent step illustrated in diagram 1d) the other portion of liquid now on top of the first layer 41 is annealed by means of the heater 33 such that the other layer 42 is built contributing to the gas sensitive element 4. Hence, the very same diagram 1d) may show the resulting gas sensor which is built from only two individually formed layers 41 and 42. However, in different embodiments, the gas sensitive element 4 may be built from more than two layers. In such embodiments, the steps according to diagrams 1c) and 1d) may be repeated a number of times N as desired, wherein each cycle of dispensing and annealing results in an additional layer on top of the sensitive layers built so far. The semiconductor chip 1 may be transferred to a different location for annealing, or may rest at the dispensing location for annealing.

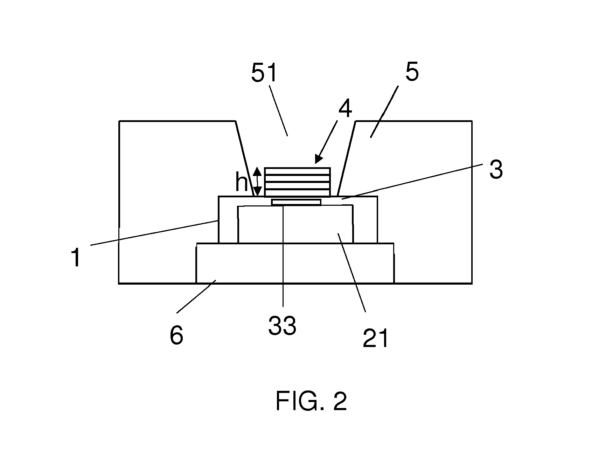

It is noted, that in the embodiment of Figure 1 the bare semiconductor chip 1 is exposed to the repeated printing / annealing cycles. However, in another embodiment, the semiconductor chip may already be arranged on a carrier such as a leadframe or a PCB, and / or may already be partially encapsulated e.g. by a mold compound. Such gas sensor, after having manufactured the gas sensitive layer 4 of height h (not scaled) and this time comprising four individual layers - is shown in Figure 2, wherein the semiconductor chip 1 of Figure 1d) additionally is arranged on a carrier 2 and is partially encapsulated in an encapsulation 5. In case the encapsulation 5 is already manufactured prior to dispensing the liquid, the liquid is dispensed through an opening 51 in the encapsulation 5.

In a further variant, multiple semiconductor chips may be arranged on a common carrier such as a leadframe and may be processed on the common carrier at least until a gas sensitive element is formed on each of these semiconductor chips. Again, the semiconductor chip at this stage may already be partially encapsulated, or not.

The semiconductor chip provided according to Figure 1 may be (pre-)manufactured along to the following lines: A silicon wafer containing the silicon substrate and the layer stack, e.g. a standard CMOS wafer, is CMOS processed for generating the integrated circuitries. The wafer serves for manufacturing multiple semiconductor chips from. In addition, in the layer stack the electrodes, the contact pads, the heaters and any of the other conducting elements may be processed in the layer stack, too. In a next step, recesses are manufactured into the backside of the wafer, and specifically underneath each heater, e.g. by etching into the semiconductor substrate. By doing so, in each future semiconductor chip a membrane is generated that may be built from the layer stack. The wafer then may be is diced into individual semiconductor chips one of which is shown in Figure 1.

The common carrier, to which the individual semiconductor chips may then be attached, preferably is a leadframe. A leadframe typically is a grid like structure made from an electrically conducting material. The individual interconnected leads may be etched or stamped from a thin plate of metal. The leadframe comprises die pads, each die pad serving as a platform to mount a semiconductor chip on. The semiconductor chips may then be electrically connected to associate contact pads of the leadframe, e.g. by wire bonding. In another step, an encapsulation is applied to each of the semiconductor chips except for an opening in each encapsulation providing access to a portion of the surface of the semiconductor chip which preferably is the membrane and whereon the gas sensitive element is built. Then, the gas sensitive elements may be built through the openings by ink jet printing according to one of the variants introduced above.

In a final step, the gas sensor packages may be separated from each other by dicing the leadframe 4 and the encapsulation, preferably from the back side and after the device is attached to a dicing tape with its front side for protecting the openings.

While above there are shown and described embodiments of the invention, it is to be understood that the invention is not limited thereto but may be otherwise variously embodied and practiced within the scope of the following claims.

## Claims

1. Method for manufacturing a gas sensor, comprising the steps of
- providing a semiconductor chip (1),
- building a gas sensitive element (4) on a surface of the semiconductor chip (1) by:
- contactless dispensing a first portion of a liquid (9) comprising sensitive material onto the surface of the semiconductor chip (1),
- annealing the dispensed first portion to generate a first layer (41) of sensitive material contributing to the gas sensitive element (4),
- for N times with N >= 1:
- contactless dispensing another portion of a liquid (9) comprising the same sensitive material onto the previously generated layer (41) of sensitive material, and
- annealing the other portion to generate another layer (42) of sensitive material contributing to the gas sensitive element (4).

2. Method according to claim 1,
wherein the first portion and any other portion of the liquid (9) to be dispensed has a volume in the range between 10 pL and 1000 pL, and preferably between 50 pL and 200 pL.

3. Method according to claim 1 or claim 2,
wherein the semiconductor chip (1) is provided including a heater (33) thermally coupled with an area of the surface of the semiconductor chip (1) to build the gas sensitive element (4) on, and
wherein the first and any other dispensed portion of the liquid (9) is annealed by activating the heater (33) thereby heating the subject dispensed portion.

4. Method according to claim 3,
wherein the first and any other dispensed portion of the liquid (9) is annealed by activating the heater (33) for a time in a range between 5 ms and 500 s.

5. Method according to any one of the preceding claims,
wherein a maximum temperature reached during annealing is more than 300° Celsius, and
wherein the next portion of the liquid (9) is contactless dispensed after the temperature in the first or other layers (41, 42) has reached a temperature in a range of less than 100° Celsius, and preferably less than 50° Celsius.

6. Method according to any one of the preceding claims,
wherein each portion of the liquid (9) is dispensed by ink jet printing, and
wherein the sensitive material contained in the liquid is a metal oxide material.

7. Method according to any one of the preceding claims,
wherein each portion of the liquid (9) has the same volume.

8. Method according to any one of the preceding claims,
wherein a reservoir (81) is provided for the liquid (9), and
wherein each portion of the liquid (9) contactless dispensed is taken from the reservoir (81).

9. Method according to any one of the preceding claims,
wherein the semiconductor chip (1) remains in a stationary position during and between all steps of repeated dispensing and annealing.

10. Method according to any one of the preceding claims,
wherein the number N of contactless dispensing and annealing cycles is a predefined number.

11. Method according to any one of the preceding claims,
wherein the number N is in a range between one and ten, and preferably between two and five.

12. Method according to any one of the preceding claims,
wherein the number N of contactless dispensing and annealing cycles is determined during manufacturing by measuring a height of the cumulative layers (41, 42) generated so far, and continuing with contactless dispensing and annealing cycles until a target height of the cumulative layers is achieved.

13. Machine for manufacturing a gas sensor, comprising
a support (10) for supporting a semiconductor chip (1),
a dispenser containing a reservoir (81) for a liquid (9) comprising a sensitive material to be dispensed onto a semiconductor chip (1) to be arranged on the support (10), for building a gas sensitive element (4) on a surface of the semiconductor chip (1),
electrical contacts for connecting to a heater (33) for annealing the liquid dispensed onto the semiconductor chip (1),
a control unit (7) configured to control the dispenser and to supply a control signal to the electrical contacts as follows:
- controlling the dispenser to contactless dispense a first portion of the liquid (9) onto the surface of the semiconductor chip (1) to be arranged on the support (10),
- by means of the control signal activating the heater (33) to be connected to anneal the dispensed first portion to generate a first layer (41) of sensitive material contributing to the gas sensitive element (4),
- for at least N times with N >= 1:
- controlling the dispenser to contactless dispense another portion of a liquid (9) comprising the same sensitive material onto the previously generated layer (41) of sensitive material, and
- by means of the control signal activating the heater (33) to anneal the other dispensed portion to generate another layer (42) of sensitive material contributing to the gas sensitive element (4).

14. Gas sensor, comprising
- a semiconductor chip (1),
- a gas sensitive element (4) arranged on a surface of the semiconductor chip (4), the gas sensitive element (4) comprising multiple layers (41, 42) of the same gas sensitive material.

15. Gas sensor according to claim 14, comprising
electrodes for electrically contacting the gas sensitive element (4), with a distance between the electrodes of less than 100 µm.
